Europäisches Patentamt

(19) European Patent Office

Office européen des brevets

(11) Publication number: **0 036 903**
**B1**

(12) EUROPEAN PATENT SPECIFICATION

(45) Date of publication of patent specification: **24.10.84**

(51) Int. Cl.³: **A 22 C 11/12**

(21) Application number: **80104208.6**

(22) Date of filing: **18.07.80**

(54) **Apparatus for cutting connecting portions of sausage chain.**

(30) Priority: **13.03.80 JP 32093/80**
**13.03.80 JP 33090/80**

(43) Date of publication of application:
**07.10.81 Bulletin 81/40**

(45) Publication of the grant of the patent:
**24.10.84 Bulletin 84/43**

(84) Designated Contracting States:
**AT BE CH DE FR GB IT LI LU NL SE**

(56) References cited:
**FR-A-1 592 411**
**FR-A-2 078 017**
**GB-A-1 536 502**
**US-A-3 156 006**
**US-A-3 646 637**
**US-A-3 659 316**
**US-A-4 104 763**

(73) Proprietor: **TOTAI COMPANY LIMITED**
**5-24-17, Ueno Taito-ku**
**Tokyo (JP)**

(72) Inventor: **Mano, Tetsuro**
**c/o Totai Co., Ltd. 24-17, Ueno 5-chome**
**Taito-ku Tokyo (JP)**

(74) Representative: **Eisenführ & Speiser**
**Martinistrasse 24**
**D-2800 Bremen 1 (DE)**

## Description

This invention relates to an apparatus for cutting connecting portions of sausage chain, in which a number of sausages packed in a casing and interconnected through connecting portions, such as Vienna sausages, are cut off into one or several pieces at a time.

A sausage connecting portion cutting apparatus of this type known from US—A— 4 104 763 includes a transfer mechanism provided in a sausage conveyance path to embrace the sausages from both sides and to transfer the sausages, a tensioning mechanism provided in back of the transfer mechanism to feed the sausages at a speed higher than that of the transfer mechanism thereby to apply tension to the sausage connecting portion, and a mechanism provided along the tensioning mechanism to cut the tensioned connecting portions. In such an apparatus, the transfer mechanism is composed of confronting arrangements of looped belts rotatably disposed on pulleys, which being adapted such that the sausages are embraced in the linear path formed between the looped belts.

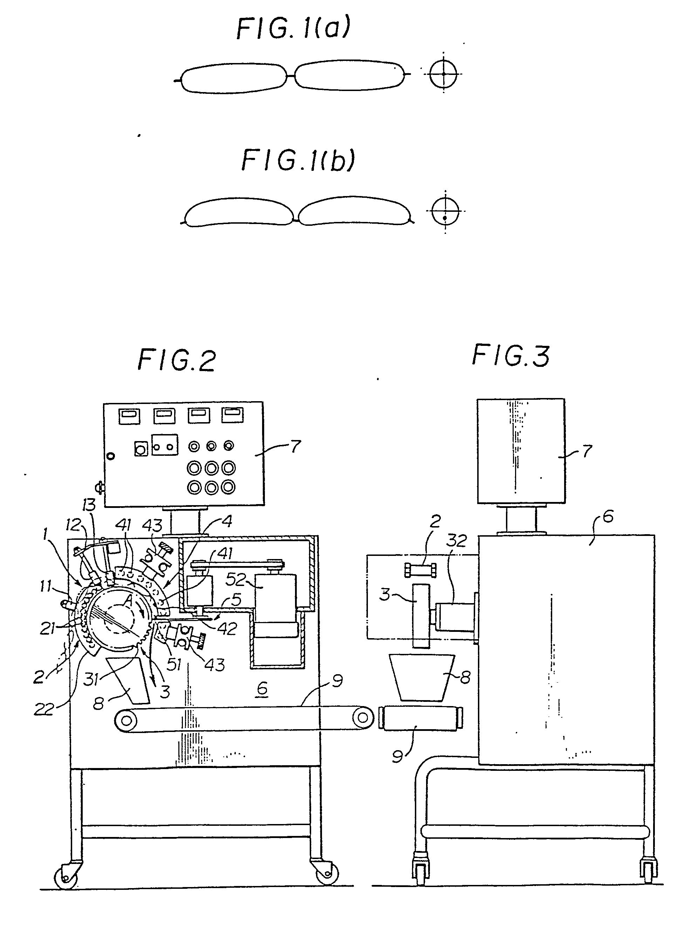

It should be noted that the sausages packed in the casing show a linear outer configuration when meat is filled therein, and that the connecting portion is positioned at the center of the sausage diameter, as shown in Fig. 1a. However, when the sausages are subjected to a heat treatment, they develop an arcuate configuration, as shown in Fig. 1b, so that the connecting portion is displaced from the sausage center. In a case where sausage chain is to be cut off with the above-mentioned cutting device, the arcuate sausages are reformed into a linear configuration and, hence, elongated when embraced between the looped belts of the transfer mechanism. Therefore, the connecting portion is bent and the front and rear ends of adjacent sausages abut against each other. In consequence, it is difficult to get an accurate cutting time of the connecting portion, and the front end or rear end of a sausage piece is accidentally cut.

The apparatus for severing sausages from a chain of arcuate sausages interconnected by connecting portions known from US—A— 3 545 035 marks the starting point of the invention. It includes

(a) guiding means to guide the interconnected sausages on a curved path, said guiding means having rollers being freely rotatable partly about axes parallel to the center of curvature of said curved path, partly about axes perpendicular thereto including a pair of rollers disposed one at each side of the curved path for orientating the arcuate sausages in accordance with the curvature of said curved path,

(b) driving means to drive the interconnected sausages along an extension of said curved path,

(c) pressing rollers for urging the sausages into driving contact with said driving means,

(d) sensing means for sensing the connecting portions between adjacent sausages, and

(e) cutting means disposed at the end of said curved path extension for cutting said connecting portions of the interconnected sausages in response to the output of said sending means.

The single pair of rollers rotatable about axes perpendicular to the center of the curvature of the curved path, as disclosed in US—A— 3 545 035 has only a limited pose correcting effect on the sausages guided thereby, the more so as said pair of rollers is located in advance of the rollers rotatable about axes parallel to said center of curvature. In addition, the subsequent pressing of the sausages along the extension of said curved path as disclosed in US—A— 3 545 035 is, apparatus-wise, rather cumbersome and often not effective enough.

Accordingly, it is an object of the present invention to provide a sausage severing apparatus of the kind concerned that incorporates both improved guiding as well as driving and pressing means.

This target is achieved, according to the present invention, in that

(1) the guiding means include a plurality of pairs of rollers successively disposed along each side of the curved path in perpendicular directions thereto, the spacing between the rollers of each pair gradually narrowing in the driving direction; and

(2) the driving means is a driving drum common to all of said pressing rollers, the circumference of said drum defining said curved path extension.

The combined action of the plurality of pairs of rollers rotatable about axes perpendicular to the center of curvature of the curved path, and narrowing in the driving direction, and the rollers rotatable about axes parallel to said center of curvature and interspersed with said pairs of rollers warrants appropriate orientation of the individual sausages before they reach the severing station. The driving drum guarantees a highly constant speed and transfer of the sausages regardless of variations in diameter.

Further embodiments of this apparatus are recited in the subclaims.

Brief Description of the Drawings

Figs. 1a and 1b are explanatory views of sausages to be separated by the apparatus of the present invention;

Fig. 2 is a side view of a sausage connecting portion cutting apparatus embodying the invention;

Fig. 3 is a front view of the apparatus shown in Fig. 2;

Fig. 4 is an enlarged cross-sectional view of a portion of the apparatus shown in Fig. 2;

Fig. 5 is an enlarged perspective view of a guide means;

Fig. 6 is an enlarged perspective view of a pressing means; and

Fig. 7 is an enlarged cross-sectional view, partially cut away, of a pressing roller.

Description of the Preferred Embodiments

A sausage connecting portion cutting apparatus illustrated in Figs. 2 and 3 is equipped with sausage guide means 1, 2, driving drum 3 for receiving sausages delivered through the guide means, a sausage pressing means 4, and a cutter mechanism 5 for cutting the connecting portions of the sausage chain.

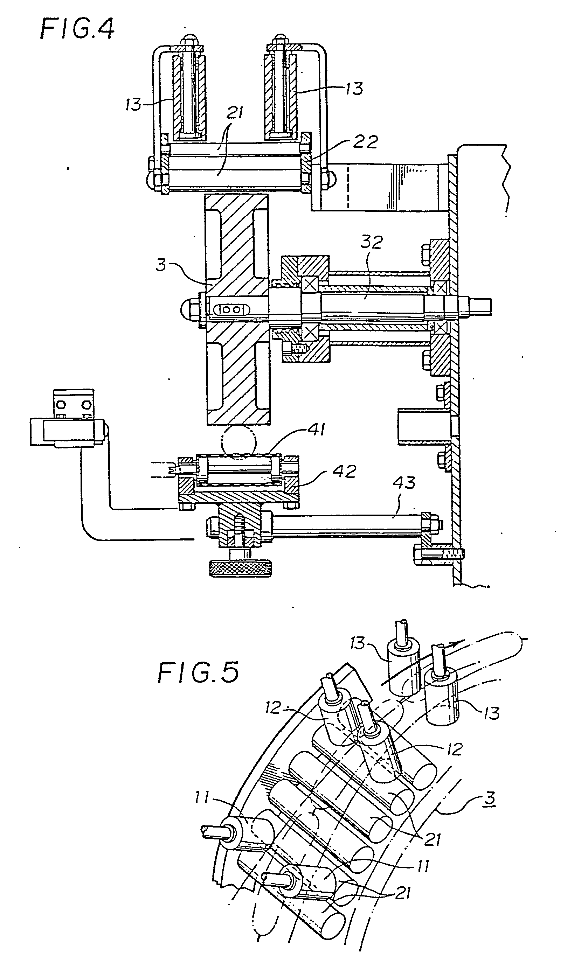

The driving drum 3 defines a circle of a large diameter and, as can be understood from Fig. 4, is connected to a drive motor (not shown) through a drive shaft 32 which is secured to the drum at the center thereof, the drum being adapted so as to rotate in the clockwise direction A in Fig. 2. Teeth 31 are cut into the outer circumference of the driving drum 3 so as to maintain the proper contact between sausages and outer circumference of the driving drum.

Fig. 5 shows the guide means 1, 2. The guide means 1 consists of pairs of rollers 11, 12, 13 each extending in a direction perpendicular to the outer circumferential surface of the driving drum 3. The rollers 11, 12, 13 are arranged such that the spacing between the rollers in each pair gradually narrows in the direction of sausage transferring until the spacing between the most forward roller pair 13 is approximately the same as the sausage diameter. The guide means 2 is composed of a plurality of laterally extending rollers 21 provided along the circumference of the driving drum 3. Each roller 21 is an idly running roller which is rotatably journalled between side plates 22, 22 disposed at the right and left of the rollers. The rollers 21 slidingly guide the sausages on the arcuate surface which the rollers form.

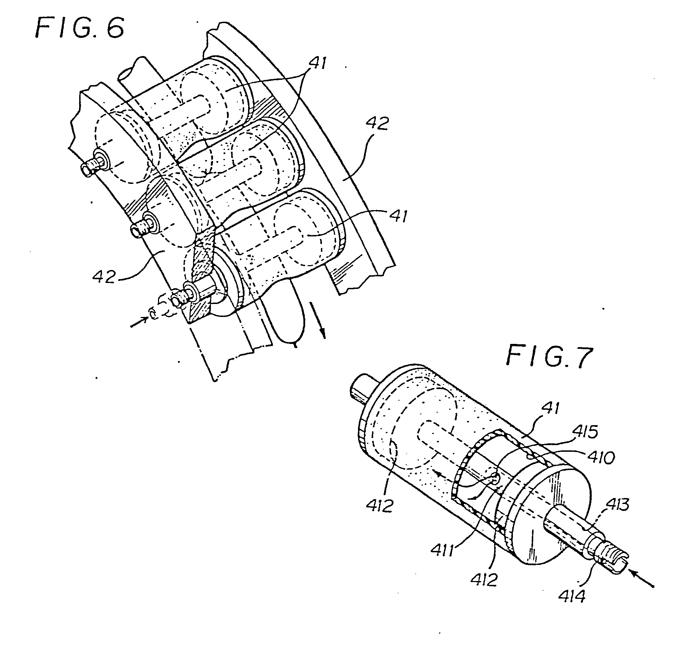

Fig. 6 illustrates the pressing means 4. The pressing means 4 is provided after the guide means 1 and is arranged to show arcuate configuration with a constant spacing from the surface of the driving drum 3. Each pressing roller 41 is rotatably journalled between side plates 42 disposed at the left and right of the rollers, and is adapted to slidingly pass the sausages, which are conveyed by the driving drum 3, against the drum surface. The side plates 42, 42 are removably screwed onto a bracket 43 and can be exchanged with another guide roller so that the spacing between the rollers and the drum surface can be suitably changed over a range of from 16 to 38 mm.

The cutter mechanism 5 includes a cutter blade 51 which is disposed at a position below a horizontal line passing through the center of the driving drum 3 and which is interposed between a portion of the rollers in the pressing means 4, and is adapted such that the cutter blade 51 is reciprocatingly driven horizontally by a driving motor 52 to which the rear portion of the cutter blade is connected. The driving motor 52 operates to drive the blade 51 horizontally in response to the detection of a sausage connecting portion by means of a photo-electric tube (not shown) disposed at a position above the blade 51.

The sausage connecting portion cutting apparatus having the above construction is operated at a control panel 7 disposed on the upper side of a machine frame 6.

More specifically, a number of interconnected sausages are accommodated in a suitable stacker (not shown) mounted at the lower left of Fig. 2. The sausage links are manually fed into the guide means 1, starting with the head of the sausage chain, and are clamped and guided between the driving drum 3 and the pressing means 4, whereupon the sausages are pulled out of the stacker one after another and transferred upwardly by the driving force of the driving drum 3. While moving upward the sausages slide along the guide means 2. Since the guide means 2 is arranged in the form of an arc, each roller of the guide means 2 rotates on its own axis and corrects the pose of each sausage such that the downwardly curved side of each sausage is directed toward the side of the roller surfaces. The sausages are supplied in this state from the guide means to the driving drum 3. Since the conveyance path between the driving drum 3 and the pressing means 4 also has an arcuate shape, the sausages are conveyed with their downwardly curved side facing toward the surface of the driving drum, so that the body of each sausage undergoes with almost no expansion and contraction. Accordingly, there is absolutely no possibility that the connecting portions will be bent because of narrowing of the distance between sausages. Furthermore, since the sausages are conveyed at a constant speed by the pressing and pulling action of the teeth 31 of the driving drum 3 and the pressing rollers 41, it is possible for the connecting strips to be accurately cut by the cutter mechanism 5 which is actuated in response to the detection of the photo-electric tube when it detects a connecting portion of sausage chain. The cut sausages are then permitted to fall onto a belt conveyor 9 through a chute 8 disposed below the driving drum 3, and are conveyed to the next processing area.

Fig. 7 shows a roller 41 of the pressing means 4 of Fig. 6. The roller 41 comprises a hollow, cylindrical air-tight body formed of a flexible tube 410. A tube which does not permit the leakage of air, such as a plastic tube or the like, is used to fabricate the flexible tube 410, and the tube is sealed at the left and right ends by circular plugs 412, 412 which are formed on the axis of the drum axle 411 at prescribed spaced-apart positions. The axle 411 has an air sucking passage 413 along its core, and is adapted such that filling air from a valve portion 414 formed at the end of the axle can be supplied into the tube from an opening 415 inside the tube.

With the pressing rollers constructed in this manner, operation is such that the sausages transferred by the circumferential surface of the driving drum 3 can be pressed against the outer circumference of the drum and fed at a constant speed. As the sausages are fed in between the driving drum 3 and the pressing roller 41, the surface of the pressing roller 41 in contact with the sausages is depressed in accordance with the shape of the sausages. This depression is formed by the flexible tube portion and allows the body of the roller 41 to come into surface contact with the sausage. The pressing roller 41, owing to its construction wherein the interior of the tube from a hollow air-tight body, allows the sausages to be pressed strongly by the internal air pressure. Accordingly, the arrangement is such that the sausages transferred by the turning effort of the driving drum are brought into pressured contact with the drum surface by the pressing rollers and are fed at a constant speed without slipping between the contacting surfaces. Moreover, the pressing rollers 41 turn idly in accordance with the movement of the sausages, so that the sausages can be fed smoothly.

**Claims**

1. An apparatus for severing sausages from a chain of arcuate sausages interconnected by connecting portions, said apparatus including

(a) guiding means (1, 2) to guide the interconnected sausages on a curved path, said guiding means having rollers (2) being freely rotatable partly about axes parallel to the center of curvature of said curved path, partly about axes perpendicular thereto including a pair of rollers disposed one at each side of the curved path for orientating the arcuate sausages in accordance with the curvature of said curved path,

(b) driving means (3) to drive the interconnected sausages along an extension of said curved path,

(c) pressing rollers (41) for urging the sausages into driving contact with said driving means (3),

(d) sensing means for sensing the connecting portions between adjacent sausages, and

(e) cutting means (5) disposed at the end of said curved path extension for cutting said connecting portions of the interconnected sausages in response to the output of said sensing means, characterized in that

(1) the guiding means (1, 2) include a plurality of pairs of rollers (11, 11; 12, 12; 13, 13) successively disposed along each side of the curved path in perpendicular directions thereto, the spacing between the rollers of each pair gradually narrowing in the driving direction; and

(2) the driving means is a driving drum (3) common to all of said pressing rollers (41), the circumference of said drum defining said curved path extension.

2. Apparatus according to claim 1, characterized by idling rollers (21) arranged in a laterally extending manner along the circumference of the driving drum (3).

3. Apparatus according to claim 1, characterized in that teeth (31) are formed on the outer circumferential surface of said driving drum (3).

4. Apparatus according to claim 1, characterized in that each pressing roller (41) is formed of a flexible tube in the form of a hollow, cylindrical, air-tight body.

5. Apparatus according to claim 4, characterized in that the axial core of the axle (411) of said each pressing roller (41) has an air passage (413) for sucking air, whereby air is introduced into the tube from an opening (415) provided therein.

**Patentansprüche**

1. Vorrichtung zum Abtrennen von Würsten von einer Kette aus untereinander durch Verbindungsabschnitte verbundenen gebogenen Würsten, mit

(a) Führungsmitteln (1, 2) zur Führung der untereinander verbundenen Würste auf einem gekrümmten Weg, die Rollen (2) aufweisen, welche teils um parallel zum Krümmungsmittelpunkt des gekrümmten Wegs parallele Achsen, teils um senkrecht dazu verlaufende Achsen frei drehbar sind und ein Paar von Rollen einschließen, die an jeder Seite des gekrümmten Weges angeordnet sind, um die gebogenen Würste gemäß der Krümmung der gekrümmten Weges auszurichten,

(b) Antriebsmitteln (3) zum Antreiben der untereinander verbundenen Würste entlang einer Verlängerung des gekrümmten Weges,

(c) Andruckrollen (41), um die Würste in Antriebskontakt mit den Antriebsmitteln (3) zu drücken,

(d) Fühlern zum Ertasten der Verbindungsabschnitte zwischen benachbarten Würsten, und

(e) am Ende der Verlängerung des gekrümmten Weges angeordneten Schneidmitteln (5) zum Auftrennen der Verbindungsabschnitte der untereinander verbundenen Würste in Abhängigkeit vom Ausgangssignal des Fühlers, dadurch gekennzeichnet, daß

(1) die Führungsmittel (1, 2) mehrere Paare von Rollen (11, 11; 12, 12; 13, 13) aufweisen, welche hintereinander an beiden Seiten des gekrümmten Weges jeweils in senkrechten Richtungen zu diesem angeordnet sind, wobei der Abstand zwischen den Rollen jedes Paares sich in Antriebsrichtung fortschreitend verringert; und

(2) die Antriebsmittel aus einer Antriebstrommel (3) bestehen, welche allen Andruckrollen (41) gemeinsam ist, und deren Umfang die Verlängerung des gekrümmten Weges definiert.

2. Vorrichtung nach Anspruch 1, dadurch gekennzeichnet, daß nicht-angetriebene Rollen (21) querverlaufend entlang dem Umfang der Antriebstrommel (3) angeordnet sind.

3. Vorrichtung nach Anspruch 1, dadurch gekennzeichnet, daß auf der äußeren Umfangsfläche der Antriebstrommel (3) Zähne (31) ausgebildet sind.

4. Vorrichtung nach Anspruch 1, dadurch gekennzeichnet, daß jede Andruckrolle (41) aus flexiblem Rohr in Form eines hohlen zylindrischen luftdichten Körpers gebildet ist.

5. Vorrichtung nach Anspruch 4, dadurch gekennzeichnet, daß der axiale Kern der Achse (411) jeder Andruckrolle (41) einen Luftkanal (413) zum Ansaugen von Luftaufweist, wodurch in das Rohr Luft von einer darin angeordneten Öffnung (415) eingeführt wird.

## Revendications

1. Un appareil pour la séparation des saucisses à partir d'une chaîne de saucisses cambrées interconnectées par des parties de liaison, ledit appareil comportant:

(a) des moyens de guidage (1, 2) pour guider les saucisses interconnectées sur une trajectoire incurvée, lesdits moyens de guidage (2) dotés de rouleaux étant librement mobiles en rotation partiellement autour d'axes parallèles à l'axe de courbure de ladite trajectoire incurvée, partiellement autour d'axes perpendiculaires à ladite trajectoire, comportant une paire de rouleaux disposés chacun à une extrémité différente de la trajectoire incurvée pour orienter les saucisses cambrées selon la courbure de ladite trajectoire incurvée;

(b) des moyens d'entraînement (3) pour entraîner les saucisses interconnectées le long d'un prolongement de ladite trajectoire incurvée;

(c) des rouleaux de pressage (41) pour repousser les saucisses en contact d'actionnement avec lesdits moyens d'entraînement (3);

(d) des moyens palpeurs pour palper les parties de liaison entre les saucisses contiguës; et

(e) des moyens de coupe (5) disposés à l'extrémité dudit prolongement de trajectoire incurvée pour couper lesdites parties de liaison des saucisses interconnectées en réponse au signal de sortie desdits moyens palpeurs; caractérisé en ce que:

(1) les moyens de guidage (1, 2) comportent une pluralité de paires de rouleaux (11, 11; 12, 12; 13, 13) disposés successivement le long de chaque côté de la trajectoire incurvée selon des directions perpendiculaires à celle-ci, l'espacement entre les rouleaux de chaque paire diminuant graduellement dans la direction d'entraînement; et

(2) les moyens d'entraînement sont constitués par un tambour d'entraînement (3) commun à tous lesdits rouleaux de pressage (41), la circonférence dudit tambour définissant ledit prolongement de la trajectoire incurvée.

2. Appareil selon la revendication 1, caractérisé par des rouleaux tournant librement (21) disposés latéralement sur la circonférence du tambour d'entraînement (3).

3. Appareil selon la revendication 1, caractérisé en ce que des dents (31) sont formées sur la surface circonférentielle extérieure dudit tambour d'entraînement (3).

4. Appareil selon la revendication 1, caractérisé en ce que chaque rouleau de pressage (41) est formé d'un tube flexible en forme de corps creux cylindrique et étanche à l'air.

5. Appareil selon la revendication 4, caractérisé en ce que le noyau axial de l'axe (411) de chacun desdits rouleaux de pressage (41) comporte un passage d'air (413) pour amener de l'air, lequel est introduit dans le tube par une ouverture (415) prévue à l'intérieur de celui-ci.

FIG.1(a)

FIG.1(b)

FIG.2

FIG.3

FIG.4

13    21    13    22

3    32

41    42    43

FIG.5

13    12    13    12    11    3    21    11    21

0 036 903

FIG. 6

FIG. 7

3